# EUROPÄISCHE PATENTANMELDUNG

(11) **EP 1 101 452 A1**
(43) Veröffentlichungstag der Anmeldung: **23.05.2001**
(21) Anmeldenummer: 00123908.6
(22) Anmeldetag: 03.11.2000
(51) Int. Cl.: A61C 9/00

(54) **Zahnmedizinischer Abdrucklöffel**

(30) Priorität: 17.11.1999 DE 29920226 U; 15.06.2000 DE 20010403 U
(71) Anmelder: Difusi Dental Kera, Andorra La Vella (AD)
(72) Erfinder: Caritg, André, Andorra La Vella (ES)
(74) Vertreter: Petersen, Frank, Dipl.-Ing.

(57) **Zusammenfassung**

Die Erfindung betrifft einen Abformlöffel für die Zahnprothetik.

Um hier beim Aushärten von Abformmaterial auf eine Arbeitskraft verzichten zu können, die während der Dauer des Aushärtens den Abformlöffel manuell fixiert, wird vorgeschlagen, den Abformlöffel so auszubilden, dass er durch Zubeißen des Patienten fixiert werden kann. Hierbei wird vorgeschlagen, den Boden des Abformlöffels mit einer sich von den Enden vergrößernden Dicke auszugestalten, um beim Zubeißen lediglich Normalkräfte auf die Oberflächen des Bodens zu erhalten. Statt den gesamten Boden in dieser sich verstärkenden Weise auszugestalten, kann auch nur ein separat einzulegender Abgusskanal mit dieser speziellen Form vorgesehen sein, der in einer speziellen Ausgestaltung auch so ausgebildet ist, dass er bei bisher bekannten Abformlöffeln zu verwenden ist.

## Beschreibung

Die Erfindung betrifft einen Abformlöffel für die Zahnprothetik mit einer U-förmig verlaufenden Rinne, die einen Boden und zwei Seitenwände aufweist.

Abformlöffel dieser Art sind in der Zahnmedizin allgemein bekannt. Mit ihnen werden Abdrücke von einem bezahnten Kiefer oder dessen Teilbereichen genommen für die nachfolgende Anfertigung von Kronen, Brücken und anderen Zahnprothesen.

Die Abdrucklöffel entsprechen mit ihrer U-förmigen Kontur dabei im wesentlichen dem Verlauf des Kiefers, von dem ein Abdruck genommen werden soll.

In die U-förmig verlaufende Rinne wird dabei eine selbstaushärtende Abdruckmasse gefüllt und dann mit dieser ein Abdruck genommen.

Mit dem Abdruck wird später dann ein Positivmodell hergestellt, das dem Zahntechniker zum Modellieren der Zahnprothetik dient.

Bei der selbstaushärtenden Abdruckmasse handelt es sich insbesondere um spezielle Silikonmassen, die nicht nur einen erheblichen Kostenfaktor für die Abformtechnik darstellen sondern auch bei ihrer späteren Entsorgung die Umwelt belasten können, z.B. weil sie als Kunststoffe auf Deponien nur schlecht verrotten.

Ein wesentliches Problem der üblichen Abdruckmassen liegt aber darin, dass für die Selbstaushärtung einige Zeit gebraucht wird, in der der Abformlöffel üblicherweise von einer Helferin in seiner Position gehalten werden muss, um einen präzisen Abdruck zu erreichen. Wenn während der Aushärtungsdauer am Abformlöffel dabei gewackelt wird, kann dies zu einem ungenauen Abdruck führen.

Aufgabe der vorliegenden Erfindung ist es daher, einen Abformlöffel wie oben beschrieben derart weiterzubilden, dass eine sicherere Handhabung erreichbar ist, bei der ein eventuell durch die Helferin verursachtes Verwackeln vermieden werden kann.

Diese Aufgabe wird erfindungsgemäß dadurch gelöst, dass der Boden eine sich von den Enden der Schenkel weg vergrößernde Dicke aufweist.

Aufgrund dieser speziellen Form des Bodens kann das Halten des Abdrucklöffels während des Aushärtens erreicht werden, indem der Patient, an dessen Kiefer der Abdruck genommen wird, auf den Abdrucklöffel beißt. Bei einem Abdrucklöffel mit einem Boden konstanter Stärke, wie er bisher benutzt wird, besteht dabei die Gefahr, dass der Abdrucklöffel an einem Ende zuerst gegen die abzudrückenden Zähne gepresst wird und sich somit verkanten kann, was dann zu einem ungenauen Abdruck führt. Dies wird mit einem erfindungsgemäßen Abdrucklöffel mit einem sich von den Enden der Schenkel her verdickenden Boden vermieden.

Hierbei liegt der Erfindung die Erkenntnis zugrunde, dass der Unterkiefer sich in erster Näherung auf einer Kreisbahn um das Kiefergelenk herumbewegt. Durch den Boden mit sich von den Enden der Schenkel vergrößernder Dicke wird dem in sofern Rechnung getragen, da der Boden - in der Seitenansicht - kreissegmentförmig ausgebildet ist. Er wird dadurch beim Zusammenbeißen sowohl vom Oberals auch vom Unterkiefer lediglich mit Kräften normal zu seiner Oberfläche beaufschlagt. Ein Verkanten, wie oben für die bisher bekannten Abdrucklöffel beschrieben, kann damit nicht mehr auftreten.

Ein Patient kann somit selbst durch Beißen auf den Abdrucklöffel den notwendigen Anpressdruck erreichen, ohne dass während des Aushärtens des Materials eine Helferin den Abformlöffel halten muss. Die Helferin kann somit für andere Arbeiten eingesetzt werden.

Bei einer besonders bevorzugten Ausführungsform ist die Verstärkung des Bodens mit einem Winkel von weniger als 5° ausgebildet. Dieser Winkel wird von einem Patienten als besonders angenehm empfunden, so dass er beim Beißen auf den Abformlöffel ohne Verspannung über längere Zeit den notwendigen Anpressdruck aufbringen kann.

Bei einer weiter bevorzugten Ausführungsform weist die Oberseite des Bodens einen sich zu den Enden der Schenkel des U anhebenden Verlauf auf.

Dieser Ausführungsform liegt die Erkenntnis zugrunde, dass die Kauflächen der Zähne nicht in einer Ebene liegen sondern von hinten nach vorne eine Kurve beschreiben, die sogenannte Spee'sche Kurve. Durch die Ausbildung des Bodens entsprechend dieser Spee'schen Kurve kann beim Zusammenbeißen die Aufbringung von Normalkräften auf den Abformlöffel weiter unterstützt werden.

Auch kann die Oberseite des Bodens eine seitliche Neigung zum Inneren des U aufweisen. Hierdurch wird berücksichtigt, dass die Kauflächen von sich links und rechts am Kiefer gegenüberliegenden Backenzähnen nicht auf einer Geraden liegen, sondern auf einer Kurve, der sogenannten Wilson'schen Kurve.

Bei einer weiter bevorzugten Ausführungsform sind die Seitenwände der U-förmig verlaufenden Rinne über den Boden hinaus verlängert und bilden so eine U-förmige Gegenbissrinne.

In dieser kann ebenfalls Abformmasse eingefüllt sein, so dass eine Abformung vom Ober- und vom Unterkiefer gleichzeitig erfolgen kann. Für die spätere Modellierung ist es nämlich von Vorteil, jeweils auch den Gegenbiss zur Verfügung zu haben.

Bisher wird in diesem Zusammenhang vorgeschlagen, separate Abdrücke vom anderen Kiefer zu nehmen. Hierfür wird dann entsprechend Abformmasse in einen separaten Abformlöffel gefüllt, was zusätzliche Arbeit und Aufwand bedeutet. Mit der hier jetzt vorgeschlagenen Form eines Abformlöffels können gleichzeitig Ober-und Unterkiefer abgeformt werden und der Patient muss sich der für ihn unangenehmen Prozedur des Abformens nur einmal unterziehen. Davon abgesehen beschleunigt dies auch den Arbeitsablauf und die mit dem Abdrucknehmen beschäftigte Helferin ist zeitlich noch kürzer gebunden.

Es hat sich dabei als vorteilhaft herausgestellt, dass im Boden zwischen den beiden Rinnen Durchtrittslöcher vorhanden sind. Dies führt nicht nur zu einer sicheren Verbindung zwischen den Abdrücken auf der Ober- und Unterseite des Abformlöffels, die Abformmasse kann sich auch bei einem Einzelabdruck besser am Abformlöffel halten und es sind somit keine Kleber notwendig oder aber Retentionen, die über Formschluss ein Halten der Abformmasse im Abformlöffel bewirken. Derartige Retentionen sind aber aufgrund von Hinterschnitten etc. später schwierig zu reinigen.

Statt den gesamten Boden des Abformlöffels mit einer sich von den Enden der Schenkel weg vergrößernden Dicke auszustatten, ist es auch im Rahmen der Erfindung, den Boden des Abdrucklöffels mit einem entlang der U-förmigen Rinne verlaufenden Wulst zu versehen, der eine sich von den Enden der Schenkel weg vergrößernde Dicke aufweist. Auch mit einem derartigen Wulst können die Effekte wie oben beschrieben erreicht werden.

Bei einer bevorzugten Ausführungsform dieses Wulstes ist dieser als entfernbare Gusskanalform mit U-förmigem Verlauf ausgebildet, für deren Befestigung eine Aufnahmerille in den Boden des Abformlöffels eingearbeitet ist. Hierbei ist bevorzugterweise am Abformlöffel im Bereich der Basis der U-förmigen Rinne auch noch ein Griff angeformt, der mit einer mit der Rinne kommunizierenden Bohrung versehen ist, in die die Gusskanalform mit einem Ansatzstücke einsetzbar ist. Diese ist bei diesem Fall dann im wesentlichen Y-förmig.

Dabei soll die im Griff vorgesehene Bohrung vorteilhafterweise einen sich zur Rinne hin konisch verjüngenden Querschnitt aufweisen. Diese konische Verjüngung kann auch stufenweise erfolgen.

Mit Abformlöffel, der mit einer entsprechenden Gusskanalform zu versehen ist, hat man nicht nur die wie oben beschriebenen Vorteile, dass ein Patient beim Zusammenbeißen lediglich Normalkräfte auf den in seinem Mund befindlichen Abformlöffel aufbringt. Man hat über die entfernbare Gusskanalform auch die Möglichkeit, ein mehrstufiges Abformverfahren durchzuführen: Hierbei wird mit dem Abformlöffel mit eingesetzter Gusskanalform ein Vorabdruck genommen, wobei das Vorabdruckmaterial relativ grob ist. Nach Aushärten des Vorabdruckmaterials wird der Abformlöffel aus dem Mund des Patienten wieder herausgenommen und die Gusskanalform wird entfernt. Es ist davon auszugehen, dass der Patient bereits auf die Gusskanalform gebissen hat, so dass durch Entfernen der Gusskanalform an diesen Bissstellen Verbindungslöcher zwischen dem Gusskanal einerseits und dem durch den Zahn etc. geformten Hohlraum erreicht wird. Andernfalls sind derartige Verbindungslöcher noch beispielsweise mit einem Skalpell oder einem ähnlichem Werkzeug herzustellen.

Nachdem dann der Abformlöffel wieder in den Mund des Patienten eingesetzt wird, kann dann durch den Gusskanal ein dünnflüssigeres Abformmaterial eingeleitet werden, dass die abzuformenden Bereiche exakter nachformt als das zuerst benutzte grobe Vorabdruckmaterial.

Um das dünnflüssigere Abformmaterial in den Gusskanal einzubringen, wird dieses über die im Griff wie oben beschrieben ausgebildete Bohrung eingespritzt. Damit hierzu Spritzen mit den unterschiedlichsten Ansatzdurchmessern verwandt werden können, ist die hierfür vorgesehene Bohrung sich konisch verjüngend ausgebildet. Eine Spritze wird damit in die sich verjüngende Bohrung soweit hineingesteckt, wie möglich, wobei sie an der für sie tiefstmöglichen Stelle dann dichtend festsitzt.

Die Gusskanalform, die aufgrund ihrer sich zu ihren Enden hin verjüngenden Querschnitts auch genutzt werden kann, um einen Abformlöffel gemäß dem bisherigen Stand der Technik umzuwandeln in einen Abformlöffel mit sich von den Enden des Abformlöffels weg verdickendem Boden- bzw. Aufbissbereich, hat insbesondere eine im wesentlichen Y-förmige Kontur. Während hierbei die paarigen Enden wie beschrieben einen sich verjüngenden Querschnitt aufweisen, ist an dem singulären Abschnitt noch eine stopfenförmige Verdickung vorgesehen. Mit dieser kann die Bohrung im Griff des Abformlöffels verschlossen werden.

Weiterhin kann an dem singulären Ende der Y-förmigen Gusskanalform auch eine Griffschlaufe ausgebildet sein. Dies erleichtert es, die Gusskanalform aus dem Gusskanal im ausgehärteten Vorabformmaterial herauszuziehen. Außerdem sei noch darauf hingewiesen, dass die Gusskanalform an ihren paarigen Abschnitten gegebenenfalls mit sich verjüngenden Seitenstegen zu versehen ist. Hierdurch kann bedarfsweise eine genauere Führung von dünnflüssigerem Abformmaterial erreicht werden zu Punkten, die abseits des eigentlichen Hauptkanales liegen.

Andererseits kann mit derartigen Seitenstegen aber auch eine Fixierung der Gusskanalform in der U-förmigen Rinne eines herkömmlichen Abformlöffels erreicht werden, bevor die Gusskanalform dort durch in den Abformlöffel gefülltes Abdruckmaterial gehalten wird.

Die jeweils konische Ausbildung des Gusskanals hat nicht nur den Vorteil, dass die Gusskanalform einfacher zu entfernen ist, sondern auch, dass in den Gusskanal eingespritztes dünnflüssigeres Abformmaterial gleichmäßig zu verteilen ist.

Weitere Vorteile und Merkmale der Erfindung ergeben sich aus der nachfolgenden Beschreibung von Ausführungsbeispielen. Dabei zeigt:
- Figur 1: eine Schrägansicht von oben eines Abformlöffels;
- Figur 2: eine Unteransicht eines Abformlöffels;
- Figur 3: eine teilweise geschnittene Seitenansicht eines Abformlöffels;
- Figur 4: eine Aufsicht auf einen Abformlöffel mit einer eingeformten Rille zur Aufnahme einer Gusskanalform;
- Figur 5: eine teilweise geschnittene perspektivische Ansicht eines Abformlöffels gemäß Figur 4;
- Figur 6: eine Schnitt durch einen Abformlöffel gemäß der Linie VI-VI in Figur 4 mit eingesetzter Gusskanalform;
- Figur 7: eine Ansicht entsprechend Figur 6 mit einer alternativen Ausführungsform einer Gusskanalform;
- Figur 8: eine Aufsicht auf eine Gusskanalform;
- Figur 9: eineSeitenansicht einer Gusskanalform;
- Figur 10: eine Aufsicht auf eine Gusskanalform mit sich verjüngenden Seitenstegen.

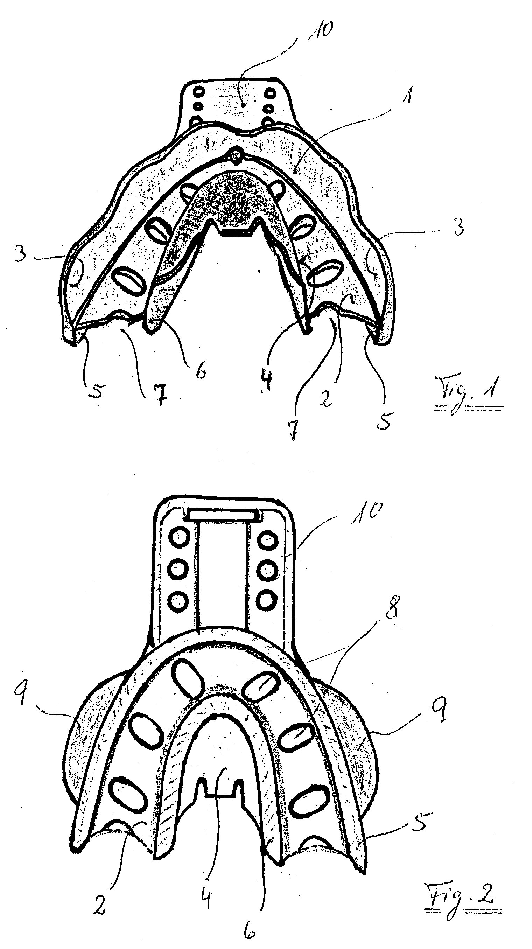

In Figur 1 erkennt man die Aufsicht auf einen Abformlöffel für die Zahnprothetik. Dieser Löffel weist eine U-förmig verlaufende Rinne 1 auf, die gebildet wird durch einen Boden 2 und zwei Seitenwände 3, 4.

Die Innenwand 4 bildet dabei eine nach oben geschlossene Wölbung, die im Mund eines Patienten dessen Gaumen folgt.

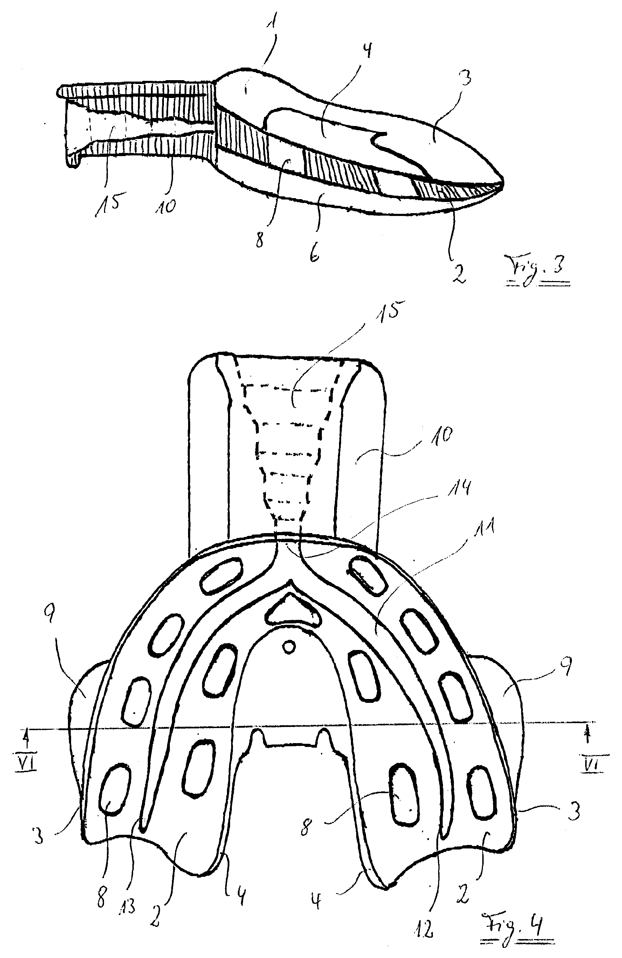

Es ist zu erkennen, dass die Seitenwände 3, 4 über den Boden 2 hinaus verlängert sind, wobei sie mit diesen verlängerten Abschnitten 5, 6 und der Unterseite des Bodens 2 eine Gegenbissrinne 7 bilden, die ebenfalls U-förmig ist. - Man erkennt dies insbesondere in der Figur 2, in der ein entsprechender Abformlöffel in der Ansicht von unten dargestellt ist.

In dieser Darstellung kann man auch sehr gut im Boden 2 vorhandene Durchtrittslöcher 8 erkennen. Deren Funktion wird später noch erklärt.

Ein Abformlöffel wie dargestellt wird üblicherweise mit einem Silikon gefüllt und dann über den Kiefer eines Patienten gestülpt, um von der hier vorhandenen Zahnsituation einen Abdruck zu nehmen. Damit beim Aushärten ein präziser Abdruck erreicht wird, muss dabei der Abformlöffel fixiert werden. Dies erfolgt üblicherweise dadurch, dass eine Zahnarzthelferin den Abformlöffel festhält. Dies hat aber den Nachteil, dass die Helferin in dieser Zeit gebunden ist und nicht für andere Arbeiten eingesetzt werden kann.

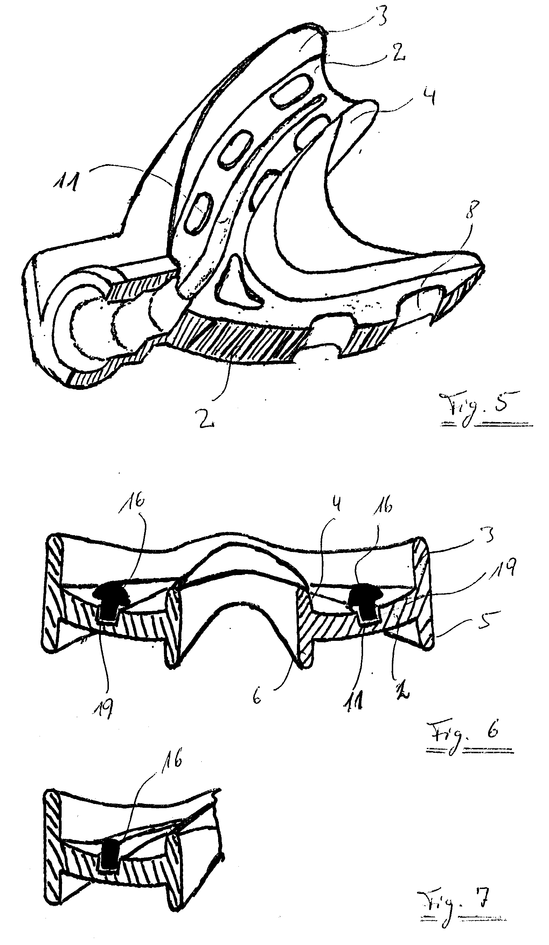

Mit dem hier beschriebenen Abformlöffel kann dies vermieden werden, da der Boden 2 eine sich von den Enden der U-förmigen Rinne 1 vergrößernde Dicke aufweist, wie dies in der Figur 3 zu erkennen ist, bei der ein Abformlöffel mit einem Schnitt in der Seitenansicht gezeigt ist, der im wesentlichen der Rinne 1 folgt.

Man erkennt in dieser Figur deutlich, dass der Boden 2 an seinem - hier rechts liegenden - einen Ende erheblich dünner ist als an seinem entgegengesetzten - hier links liegenden - Ende. Die Zunahme der Dicke ist konstant und entspricht einem Steigungswinkel von ca. 5°.

Durch diese zunehmende Dicke kann erreicht werden, dass ein Patient den Abformlöffel halten kann mittels Zubeißen. Da sich der Unterkiefer näherungsweise auf einer Kreisbahn um das Kiefergelenk bewegt, wird durch den sich in der Dicke vergrößernden Boden 2 erreicht, dass sowohl auf der Ober- als auch auf der Unterseite des Bodens die Zähne in Normalrichtung auf die Oberfläche des Bodens wirken, so dass der Boden beim Zusammenbeißen nicht gekippt wird oder ähnliches, was zu einem Verwackeln des Abformlöffels und damit zu einem nicht exakten Abdruck führen würde.

Man erkennt in der Figur 3 weiterhin, dass der Boden 2 einen geschwungenen Verlauf hat und sich dabei insbesondere an den Enden der U-förmigen Rinne 1 gegenüber einer gedachten Ebene anhebt. Dieser spezielle Verlauf berücksichtigt die sogenannte Spee'sche Kurve, d.h. die Kurve, auf der die Kauflächen in einem Gebiss liegen.

Wie bereits erwähnt, wird in die Rinne 1 aushärtendes Silikon gegeben, bevor der Abformlöffel auf das Gebiss eines Patienten aufgesetzt wird. Dieser beißt dann zu, wobei er aufgrund des sich verdickenden Bodens 2 eine gleichmäßige Kraftverteilung in den Abformlöffel erreicht, so dass kein Kippen des Abformlöffels auftritt. Beim Abformen überflüssiges Abformmaterial drängt sowohl seitlich an den Seitenwänden 3 und 4 hoch als auch durch die oben angesprochenen Durchtrittlöcher 8. Beim Aushärten verhakt sich das Abformmaterial in diesen Durchtrittslöchern 8, so dass beim anschließenden Herausnehmen des Abformlöffels von dem Gebiss sichergestellt ist, dass das ausgehärtete Abformmaterial sicher im Abformlöffel verankert ist.

Damit der Abformlöffel einfach zu entnehmen ist, sind an der Außenseite der Seitenwände 3 Abdrucklaschen 9 vorgesehen. An diesen kann eine Zahnarzthelferin angreifen, um den Abformlöffel vom Kiefer eines Patienten abzuziehen. Da dieser Abdrucklaschen direkt benachbart zu der mit Abformmaterial gefüllten U-förmigen Rinne sind, wird hierbei auch ein Kippen verhindert, wie es auftreten könnte, wenn versucht wird, über den an dem Abformlöffel vorhandenen Griff 10 den Abformlöffel auszuformen.

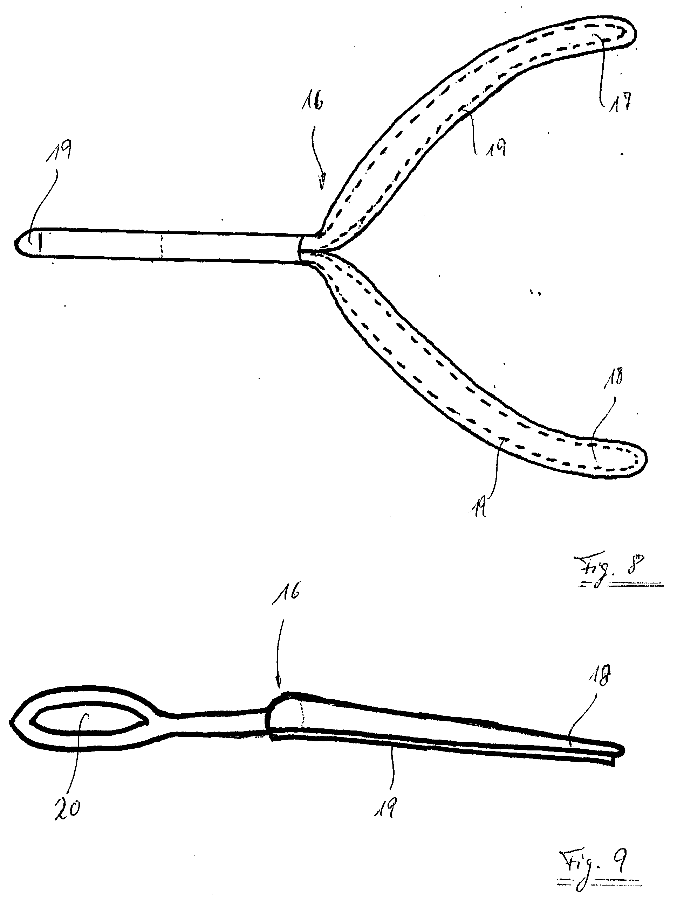

Bei einer Weiterbildung der Erfindung, wie sie in den Figuren 4-7 dargestellt ist, ist in den Boden 2 eine Rille 11 eingeformt. In diese kann eine entfernbare Gusskanalform eingesetzt werden, wie sie in den Figuren 8-10 dargestellt ist.

Die Rille 11 hat einen im wesentlichen Y-förmigen Verlauf mit zwei paarigen Enden 12,13 und einem singulären Ende 14. Das singuläre Ende 14 korrespondiert mit einer sich in erster Näherung im Querschnitt konisch verjüngenden Bohrung 15, die in den Griff 10 des Abformlöffels integriert ist.

Bei einem derartigen Abformlöffel wird eine Gusskanalform, wie sie weiter unten noch beschrieben wird, in die Rille 11 eingelegt und dann wird die U-förmige Rinne 1 mit aushärtendem Silikon verfüllt und ein erster Vorabdruck am Gebiss des Patienten genommen. Nach Aushärten des Silikons wird die Gusskanalform aus dem Abformmaterial herausgezogen, wodurch oberhalb der Rille 11 im ausgehärteten Silikon ein hohler Gusskanal entsteht.

Da die Gusskanalform mit der Bohrung 15 im Griff 10 in Verbindung steht, ist somit nach Entfernen der Gusskanalform über die Bohrung 15 ein Zugang zu dem Gusskanal geschaffen. Durch diese Bohrung kann somit dann dünnflüssigeres Abformmittel in den Abgusskanal hineingedrückt werden.

Zum Einbringen dieses dünnflüssigeren Abformmaterials kann dabei eine Spritze in die Bohrung 15 eingesetzt werden. Da aufgrund des im wesentlichen konischen Verlaufes der Bohrung diese Bohrung unterschiedlichste Durchmesser aufweist, kann der an einer Spritze vorhandene Ansatz ebenfalls sehr unterschiedlich sein. Durch den konischen Verlauf der Bohrung wird somit eine erhöhte Variabilität erreicht im Hinblick auf an dieser Bohrung anzusetzende Spritzen.

Es wird davon ausgegangen, dass beim Zubeißen ein Patient auf den Abformkanal beißt, so dass nach Entfernen der Gusskanalform über den Gusskanal bei einem erneuten Einsetzen des Abformlöffels auf den Kiefer eines Patienten dünnflüssigeres Material eingespritzt werden kann, das die Zahnsituation noch präziser abformt als das Vorabdruckmittel.

Sollten beim Zubeißen im Vorabdruckmittel keine Verbindungen wie angesprochen zwischen dem Gusskanal und dem durch einen Zahn bewirkte Hohlraum entstanden sein, können diese im ausgehärteten Vorabformmittel gegebenenfalls noch mit einem Werkzeug wie einem Skalpell oder ähnlichem nachgeformt werden.

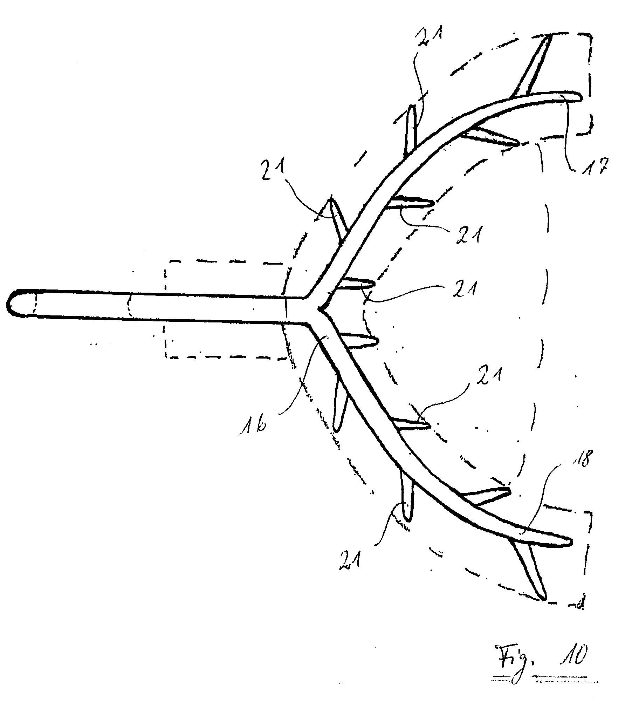

In der Figur 6 ist zu erkennen, dass eine Gusskanalform 6 einen im wesentlichen Pilz-förmigen Querschnitt aufweisen kann, so dass durch die Gusskanalform 16 die Rille 11, in die die Gusskanalform 16 eingesetzt ist, abgedeckt ist. Es ist aber auch möglich, dass der Querschnitt einer Gusskanalform 16, wie in der Figur 7 zu erkennen ist, im wesentlichen rechteckig ist, eine derartige Form ist einfacher herzustellen.

Wie in der Figur 8 in der Aufsicht zu erkennen ist, ist auch die Gusskanalform mit einer im wesentlichen Y-förmigen Kontur ausgestaltet, wobei die beiden paarigen Abschnitte mit sich zu ihren Enden verjüngendem Querschnitt ausgebildet sind, wie dies in der Figur 9 in der Seitenansicht zu erkennen ist. Man erkennt in dieser Seitenansicht auch, dass auf der Unterseite der Gusskanalform 16 ein Ansatz 19 verläuft, mit dem die Gusskanalform 16 in die Rille 11 am Boden 2 eines Abformlöffels wie in den Figuren 4 und 5 dargestellt eingesetzt werden kann.

Des weiteren ist in den Figuren 8 und 9 noch zu erkennen, dass das singuläre Ende 19 der Gusskanalform 16 mit einer Griffschlaufe 20 ausgebildet ist. Durch diese Griffschlaufe kann die Gusskanalform 16 aus dem Gusskanal herausgezogen werden, wenn das über der Gusskanalform sitzende Vorabformmaterial ausgehärtet ist, so dass in den dann entstehenden Hohlraum wie oben beschrieben das dünnflüssigere Abformmittel eingespritzt werden kann.

Wie erwähnt und wie auch in der Figur 9 gut zu erkennen, hat die Gusskanalform zu ihren paarigen Enden hin einen sich verjüngenden Querschnitt. Dies hat nicht nur den Vorteil, dass die Gusskanalform einfacher durch Ziehen an der Griffschlaufe aus dem Vorabdruckmaterial entfernbar ist, sondern bewirkt auch, dass die Gusskanalform bei einem Boden mit paralleler Ober- und Unterseite eine Verdickung des Bodens bewirkt, durch die wie oben beschrieben ein Zusammenbeiβen mit Aufbringung von lediglich Normalkräften beim Abformen eines Kieferab-druckes erreichbar ist.

Grundsätzlich kann eine derartige Gusskanalform auch ohne das Vorhandensein einer entsprechenden hierfür notwendigen Rille 11 in einen Abformlöffel nach dem Stand der Technik eingelegt werden.

Eine hierfür vorgesehene Gusskanalform ist in der Figur 10 dargestellt. Bei dieser Gusskanalform sind an die paarigen Enden 17, 18 über deren Verlauf sich verjüngende Seitenstege 21 angeformt. Diese Seitenstege dienen dazu, eine Gusskanalform in die nur strichpunktiert dargestellte U-förmige Rinne eines Abformlöffels ohne spezielle Rille 11 einzulegen, wobei diese Seitenstege dann die Gusskanalform 16 bzw. deren paarigen Ende 17, 18 in der richtigen Position fixieren.

Die Seitenstege 21 sind dabei einerseits selbst wieder leicht sich verjüngend ausgebildet, um so leichter entfernbar zu sein. Zum anderen sind sie auch etwas geneigt, um das Herausziehen der Gusskanalform 16 aus abgehärtetem Vorabformmaterial nicht widerhakenartig zu behindern.

Mit einer derartigen, sich zu ihren Enden hin querschnittmäßig verjüngenden Gusskanalform kann erreicht werden, dass auch bei herkömmlichen Abformlöffeln eine sich verdickender Aufbissbereich gebildet wird, so dass ein Abformlöffel durch Zusammenbeissen von einem Patienten gehalten werden kann, ohne dass der Abformlöffel kippt. - Dies wird durch die eingelegte Gusskanalform verhindert.

## Patentansprüche

1. Abformlöffel für die Zahnprothetik mit einer U-förmig verlaufenden Rinne (1), die einen Boden (2) und zwei Seitenwände (3, 4) aufweist,
dadurch gekennzeichnet,
dass der Boden (2) eine sich von den Enden der Schenkel weg vergrößernde Dicke aufweist.

2. Abformlöffel gemäß Anspruch 1,
dadurch gekennzeichnet,
dass die Oberseite des Bodens (2) einen sich zu den Enden der Schenkel des U anhebenden Verlauf aufweist entsprechend der Spee'schen Kurve

3. Abformlöffel gemäß Anspruch 1,
dadurch gekennzeichnet,
dass die Oberseite des Bodens (2) eine seitliche Neigung zum Inneren des U aufweist entsprechend der Wilson'schen Kurve.

4. Abformlöffel gemäß Anspruch 1,
dadurch gekennzeichnet,
dass die Seitenwände (3, 4) über den Boden (2) hinaus verlängert sind (5, 6) und eine U-förmige Gegenbissrinne (7) bilden.

5. Abformlöffel gemäß Anspruch 1,
dadurch gekennzeichnet,
dass im Boden (2) Durchtrittslöcher (8) vorhanden sind.

6. Abformlöffel, insbesondere gemäß dem Oberbegriff des Anspruches 1, dadurch gekennzeichnet,
dass in den Boden (2) eine Rille (11) zur Aufnahme einer entfernbaren Gusskanalform (16) eingearbeitet ist.

7. Abformlöffel gemäß Anspruch 6,
dadurch gekennzeichnet,
dass am Abformlöffel im Bereich der Basis der U-förmigen Rinne (1) ein Griff (10) angeformt ist, der mit einer mit der Rinne (1) kommunizierenden Bohrung (15) versehen ist, in die die Gusskanalform (16) mit einem Ansatzstück (19) einsetzbar ist.

8. Abformlöffel gemäß Anspruch 7,
dadurch gekennzeichnet,
dass die Bohrung (15) einen sich zur Rinne (1) konisch verjüngenden Querschnitt aufweist.

9. Gusskanalform zur Verwendung mit einem Abformlöffel insbesondere gemäß einem oder mehreren der vorhergehenden Ansprüche,
dadurch gekennzeichnet,
dass die Gusskanalform (16) eine im wesentlichen U-förmige Kontur aufweist, mit zu den paarigen Enden (17, 18) sich verjüngendem Querschnitt.

10. Gusskanalform gemäß Anspruch 9,
dadurch gekennzeichnet,
die Gusskanalform (16) Y-förmig ist, wobei an dem singulären Ende (19) der Gusskanalform (16) eine Griffschlaufe (20) ausgebildet ist.

11. Gusskanalform gemäß Anspruch 9,
dadurch gekennzeichnet,
dass an ihren paarigen Abschnitten (17, 18) sich verjüngende Seitenstege (21) angeformt sind.
